# EUROPÄISCHE PATENTSCHRIFT

(11) **EP 0 843 245 B1**
(45) Veröffentlichungstag und Bekanntmachung des Hinweises auf die Patenterteilung: **07.06.2000**
(21) Anmeldenummer: 97111822.9
(22) Anmeldetag: 11.07.1997
(51) Int. Cl.: G05D 1/08, B64G 1/10

(54) **Verfahren und Anordnung zur Positionshaltung eines geostationären Satellitenschwarms unter Benutzung einer optischen Satellitenverbindung**
Method and device for position maintenance of a geostationary satellite constellation using an optical satellite connection
Méthode et dispositif pour le maintien en formation d'une constellation de satellites géostationnaires utilisant une liaison optique entre les satellites

(30) Priorität: 15.11.1996 CH 282896
(43) Veröffentlichungstag der Anmeldung: 20.05.1998
(73) Patentinhaber: Contraves Space AG, 8052 Zürich (CH)
(72) Erfinder: Kellermeier, Johann, 85579 Neubiberg (DE)
(74) Vertreter: Hotz, Klaus, Dipl.-El.-Ing./ETH Patentanwalt

(56) Entgegenhaltungen:
- EP-A- 0 284 075
- WO-A-92/20576
- DE-A- 4 243 395
- GB-A- 2 288 038

## Beschreibung

Die Erfindung betrifft ein Verfahren zur Haltung der Positionen von Satelliten eines Satellitenschwarmes relativ zu den übrigen Satelliten des Satellitenschwarms unter Benutzung einer optischen Satellitenverbindung nach dem Oberbegriff des Anspruchs **1** sowie eine Anordnung zur Durchführung des Verfahrens nach dem Oberbegriff des Anspruchs **9**.

Bei der herkömmlichen Positionshaltung eines geostationären Satelliten soll sich der Satellit fortlaufend in einem vorgegebenen Längen- und Breitenbereich, im sogenannten Toleranzfenster, befinden. Um dies zu gewährleisten, werden beim Stand der Technik zu geeigneten Zeiten mit einer oder mehreren entsprechend ausgerüsteten Bodenstationen Bahnvermessungen, was als Tracking bezeichnet wird, durchgeführt, mit deren Hilfe die genaue Satellitenposition festgestellt und vorhergesagt wird, das heisst, es werden Bahnbestimmung und Prädiktion durchgeführt. Um ein durch natürliche und erzwungene Bahnstörungen hervorgerufenes Verlassen des Toleranzfensters zu vermeiden, um also eine Positionshaltung zu gewährleisten, werden im Bodenkontrollzentrum Bahnkorrekturmanöver errechnet und über eine Bodenstation an den Satelliten zur Ausführung übermittelt. Die erforderliche Kommandosequenz wird am Boden generiert, überprüft und an den Satelliten gesandt. In jedem Zwischenschritt wird die Reaktion des Satelliten aus seinen Telemetriedaten überprüft.

Wegen zunehmender Nutzung und Aufteilung der geostationären Umlaufbahn werden jedoch von den zuständigen Behörden mehreren Satelliten gemeinsame Toleranzfenster zugeteilt, das heisst, die Satelliten werden kopositioniert. Untersuchungen haben gezeigt, dass durch eine unkoordinierte Positionshaltung innerhalb eines Toleranzfensters für die Satelliten ein nicht zu vernachlässigendes Kollisionsrisiko besteht.

Durch entsprechende koordinierte Positionshaltungstrategien, die zwischen den Bahnelementen der einzelnen Satelliten definierte Differenzen, die sogenannte nominale Relativbahnen festlegen, vorsehen, lässt sich das Kollisionsrisiko erheblich reduzieren. Häufig diskutierte Strategien verwenden eine Längentrennung, eine Exzentrizitätsvektortrennung oder eine koordinierte Exzentrizitäts-/lnklinationsvektortrennung So werden beispielsweise die französischen Telekommunikationssatelliten TDF-1 und TDF-2 bei 18.8° westlicher Länge durch unterschiedliche Exzentrizitätsvektoren in einem 0,2° x 0.2° grossen Toleranzfenster gehalten. Die britischen Satelliten BSB-1 und BSB-2 bei 31° westlicher Länge unterliegen einer koordinierten Exzentritäts-/lnklinationsvektortrennung

Die Bahnvermessung durch Trackingstationen am Boden führt im allgemeinen zu relativ grossen Bahnbestimmungsfehlern bezüglich der Längenposition der Satelliten. Dieser nachteilige Effekt wird durch Bahnkorrekturmanöver, vor allem Inklinationsmanöver, welche bei ihrer Ausführung in Grösse und Richtung ebenfalls mit Fehlern behaftet sind, insofern verstärkt, dass eine zusätzliche, unbeabsichtigte Längendrift entstehen kann. Die aus diesen Gründen reduzierte Sicherheit erfordert bei der Positionshaltung mehrerer Satelliten innerhalb eines Toleranzfensters grössere Beträge in der Trennung der Bahnelemente Exzentrizität und Inklination, was jedoch eine unnötig weiträumige Ausnutzung des zur Verfügung stehenden Bereiches des Toleranzfensters zur Folge hat und die mögliche Anzahl an Satelliten pro Toleranzfenster begrenzt.

Ein weiterer Nachteil der Bahnvermessung durch Bodenstationen besteht darin, dass sich die Geometrie der zu vermessenden Position eines geostationären Satelliten nur geringfügig und langsam, nämlich mit einer Periode von einem Tag ändert. Daher ist für hinreichend genaue Bahnbestimmungen heute ein Zeitaufwand von ungefähr zwei Tagen erforderlich. Um der zunehmenden Anzahl von Satelliten auf der geostationären Umlaufbahn langfristig gerecht zu werden, sind hingegen genauere und schnellere Bahnvermessungsbzw. Bahnbestimmungsverfahren notwendig.

Die koordinierte Positionshaltung innerhalb eines Toleranzfensters, dessen Bereich verschiedenen Ländern zur Nutzung zugewiesen wurde, wird, wie die Praxis zeigt, durch eine Anzahl von Gründen erschwert. So werden Satelliten, die von verschiedenen Ländern betrieben werden, in den meisten Fällen auch durch verschiedene Bodenstationen vermessen und gesteuert. Diese dezentrale Kontrolle führt dazu, dass sich die prinzipiell gleichen Positionshaltungsverfahren vervielfachen, und ein zusätzlicher Aufwand zur Koordination der Bodenkontrollzentren etwa zur Abstimmung der Trackingsysteme und Berechnungsprogramme notwendig wird. Dies wiederum hat einen hohen Zeitaufwand, einen aufwendigen Datentransfer und beachtliche Kosten zur Folge. Gleichzeitig wird der Bereich möglicher Fehlerquellen erweitert. Weiterhin ist die am Boden erforderliche, detaillierte Kommandosequenz zur Durchführung eines Bahnmanövers und deren schrittweise Überprüfung am Boden ausgesprochen aufwendig.

Zusätzlich zu diesem allgemeinen Stand der Technik wird in der deutschen Offenlegungsschrift ***DE 42 43 395 A1*** ein Verfahren zur koordinierten Positionshaltung eines Satellitenschwarms an einer Position vorgeschlagen, bei welchem nur ein einziger Satellit des Schwarms vom Boden aus vermessen und kontrolliert wird. Die übrigen Satelliten unterliegen der Kontrolle dieses als MASCOT (Multiple Application Satellite for Cluster Control and Operational Tasks) bezeichneten Satelliten, der neben seiner eigentlichen Aufgabe z.B. als Telekommunikationssatellit ausserdem noch die Kontrolle des gesamten Satellitenschwarms übernimmt. Hierbei sind alle Satelliten des Schwarms bis auf MASCOT durch kombinierte Exzentritäts- und Inklinationsvektorseparation voneinander getrennt, das heisst, jeder Satellit bewegt sich auf einer elliptischen Bahn um die Erde. wobei die Längengrade der erdnächsten und erdfernsten Punkte der Bahnen dieser Satelliten ohne Berücksichtigung der Eigendrehung der Erde verschieden sind. Für den sich mit der Erde drehenden Beobachter scheinen die Satelliten zu verschiedenen Tageszeiten nacheinander der Erde am nächsten bzw. am Fernsten zu sein. Da weiterhin ein sich auf elliptischer Bahn bewegender Satellit mit seinem vom Drehpunkt ausgehenden Ortsvektor zu gleichen Zeiten immer gleiche Flächen überstreicht, sind auch periodisch wiederkehrende Abweichungen von der mittleren Position der Satelliten bezüglich ihres Längengrades durch einen sich mit der Erde drehenden Beobachter festzustellen. Innerhalb des Satellitenschwarms ist zu beobachten, dass sich die einzelnen Satelliten in Überlagerung zu einer idealen Kreisbahn um die Erde auf einer Ellipse bewegen, auf welcher die Satelliten des Schwarms einander im Laufe eines Tages umkreisen. Um gegenseitige Abschattungen zu vermeiden, ist die Ebene der Erdumlaufbahn eines jeden Satelliten verschieden gegen die Ebene des Erdäquators geneigt, wodurch sich die Satelliten einander auf einer Ellipse umkreisen, die gegen die Äquatorebene geneigt ist, wodurch jeder Satellit immer über einen unverstellten Ausbreitungspfad in Erdrichtung verfügt. Als wesentlicher Teil dieser Strategie ist der MASCOT in dieser Ellipse derart positioniert, dass er mittels optischem oder Mikrowellenradar seine relative Position zu jedem anderen Satelliten des Schwarms bestimmen und aussserdem mit jedem Satelliten des Schwarms drahtlos Daten austauschen kann

MASCOT ist somit die Aufgabe zugewiesen, alle übrigen Satelliten zu kontrollieren und gegebenenfalls Korrekturen der Bahnen einzelner Satelliten relativ zu MASCOT zu veranlassen. Weiterhin werden kollektive Korrekturen des ganzen Satellitenschwarms über MASCOT durchgeführt, dessen Position von einer Bodenstation aus vermessen wird und als Position des Satellitenschwarms gilt. Befehle zur Bahnänderung werden über diesen Satelliten an alle anderen weitergereicht, wobei durch MASCOT die Position der übrigen Satelliten im Schwarm gemessen und gegebenenfalls korrigiert wird Da die meisten für diese Operationen nötigen Einrichtungen auf MASCOT installiert sind. ist für jeden Satellitenschwarm wenigstens ein Ersatzsystem vorgesehen, um im Störungsfall nicht den ganzen Satellitenschwarm zu verlieren.

Ein wesentlicher Nachteil dieser Methode liegt somit in der zentralen Bedeutung eines einzigen mit spezieller Ausrüstung versehenen Satelliten, wobei eventuelle Ersparnisse bei den übrigen Satelliten des Schwarms gegen die Missionszuverlässigkeit abgewogen werden. Weiterhin ist die Anordnung der Satelliten zueinander von vornherein auf die kombinierte Anwendung von Exzentritäts- und Inklinationsvektortrennung beschränkt, und eine an und für sich ideale Anordnung auf in dichter Folge gestaffelten Längengraden wegen der fehlenden Ausbreitungspfade über die jeweils benachbarten Satelliten hinaus nicht möglich Es braucht also immer einen speziell ausgebildeten Satelliten um die Masterfunktion zu übernehmen, das heisst, es ist wenigstens ein weiterer Master im Schwarm zu plazieren um gegebenenfalls -bei Ausfall des eigentlichen Masters- die Ersatzfunktion zu übernehmen.

**Aufgabe** der im folgenden beschriebenen Erfindung ist es daher, die Nachteile des Standes der Technik zu vermeiden und
- ein Verfahren sowie
- eine Anordnung zur Durchführung des Verfahrens aufzuzeigen, um unabhängig von der gewählten Anordnung von einzelnen Satelliten eines an einer gemeinsam genutzten Stelle positionierten Satellitenschwarms, die Bestimmung der Satellitenpositionen zueinander und die Organisation gemeinsamer Bahnkorrekturen und damit die Korrektur der relativen Position der Satelliten zueinander zu ermöglichen.

Die **Lösung** dieser Aufgabe erfolgt
- für das Verfahren durch die Merkmale der kennzeichnenden Teile des Anspruchs **1** und
- für die Anordnung durch die Merkmale des kennzeichnenden Teils des Anspruchs **9**.

Bevorzugte Weiterbildungen des erfindungsgemässen Verfahrens sind durch die Ansprüche **2** bis **8** definiert.

Aufgrund ihres niedrigen Gewichts und des geringen Platzbedarfs haben nun vorzugsweise optische Übertragungseinrichtungen für den Datenaustausch zwischen Satelliten gegenüber Mikrowellen-Richtfunkeinrichtungen an Bedeutung gewonnen. Es existieren bereits Vorschläge für optische Terminals, die simultane Übertragung in beiden Richtungen eines Freiraum-Verbindungspfades zulassen und gleichzeitig die präzise Erfassung der gegen seitigen Entfernung beider beteiligten Satelliten zulassen (CH-Pat.Anmeldungen 1996: 2414/96 und 2415/96). Da die Vernetzung geostationär umlaufender Satellitenschwärme aufgrund von Missionsaspekten ohnehin notwendig erscheint, da z.B. mehrere Satelliten eines Schwarms sehr grosse Antennen tragen, auf deren Nutzung auch über benachbarte Satelliten operierende Teilnehmer angewiesen sind, bieten sich diese Einrichtungen zur synergetischen Nutzung bei der Bestimmung der Relativpositionen aller Satelliten eines Schwarms sowie zu deren gegenseitigen Ausrichtung an.

Zur Minimierung der Anzahl erforderlicher optischer Terminals stellt jeder Satellit eines Schwarms mittels zweier Terminals bidirektionale Verbindungen zu seinen zwei am nächsten gelegenen Nachbarn her. Werden die Satelliten durch kombinierte Exzentritätsvektor- und Inklinationsvektor-Separation angeordnet, ergeben sich auf einer Ellipse gegenseitig umkreisende Satelliten. Die Verbindungsführung über die jeweils nächstgelegenen Nachbarn ergibt ein optisches Netz mit ringförmiger Topologie, in welchem durch bidirektionale Übertragung in beiden Umlaufrichtungen Daten von Satellit zu Satellit weitergereicht werden können. Solche Netze werden auf Lichtleitfasern basierend terrestrisch bereits umfangreich eingesetzt (FDDI, Überblick und Anwendung, Chr. P. Wrobel, VDE-Verlag, Berlin).

Wird die Anordnung auf in dichter Folge gestaffelten Längengraden bevorzugt, wird aus der geschlossenen Ringverbindung eine an den Schwarmenden offene Kette. Innerhalb dieses optischen Netzes können die durch an den optischen Terminals vorgesehene Software inhärenten 'Fähigkeiten' und die gewonnenen Daten über den Abstand sowie die Richtung zu den beiden jeweils nächstgelegenenen Nachbarsatelliten diese unter allen beteiligten Satelliten ausgetauscht werden, sofern es nicht die End- bzw. Ecksatelliten der Kettenformation sind. In jedem Satelliten ist somit die vollständige Information über die relative Position aller Satelliten zu ihren Nachbarn bekannt, und zwar doppelt redundant, da durch beide an einer Verbindung beteiligten Satelliten Messungen vorgenommen werden.

Es kann also ein bestimmter, prinzipiell aber beliebiger, korrekt positionierter Satellit des Schwarms als Ursprung eines für den ganzen Schwarm verbindlichen Koordinatensystems bestimmt werden. Jeder der übrigen Satelliten bestimmt seine relative Position zu diesem Satelliten durch Addierung aller Strecken zwischen den dazwischen liegenden Satelliten.

Die Anordnung durch kombinierte Exzentritätsvektor- und Inklinationsvektor-Separation erlaubt hierbei über beide Richtungen des Rings doppelte Redundanz.

Die relativen Positionen der Satelliten zueinander werden dadurch gehalten, dass vorzugsweise alle Satelliten die Messdaten über die relativen Positionen zueinander austauschen und gemäss ihrer jeweils einprogrammierten relativen Soll-Position autonom Korrekturmanöver ausführen, wobei der Mastersatellit über die Bodenkontrollstation die Referenzposition einnimmt.

Satellitenschwärme werden im allgemeinen nach und nach durch mehrere Raketenstarts zusammengestellt. Hierbei muss während der Aufstiegsphase zur geostationären Bahn eine Überwachungsmöglichkeit durch die Bodenstation bestehen. Da hierdurch entsprechende Übertragungseinrichtungen innerhalb des Satelliten ohnehin notwendig sind, kann später in der geostationären Umlaufbahn prinzipiell jeder Satellit autonom kontrolliert werden. Allein die drohende Kollisionsgefahr erfordert eine koordinierte Strategie für alle Satelliten eines Schwarms, das heisst die Kontrolle von einer einzigen Bodenstation aus.

Erteilt die Bodenstation den Befehl zu einem Korrekturmanöver an einen ausgewählten Satelliten, so ist dieser Mastersatellit in der Lage über die optische Satellitenverbindung simultane Korrekturmanöver bei allen beteiligten Satelliten des Satellitenschwarms zu veranlassen, wobei gleichzeitig die relativen Positionen zu dem Mastersatelliten durch die jeweiligen Bordrechner erhalten bleiben.

Besonders geeignete bzw. vorteilhafte Anordnungen sind einerseits eine elliptische Anordnung in einer Ebene, die gegenüber der Äquatorialebene sowohl um die Ost- als auch um eine Radialachse um einen vorbestimmten Betrag gekippt ist, dies einerseits in Richtung der Ostachse, um für jeden Satelliten des Schwarms jederzeit durch andere Satelliten des Schwarms unverstellte Ausbreitungspfade zur Erde sicherzustellen, andererseits, um die in Ost-West-Richtung besonders hohe Kollisionsgefahr zwischen Satelliten desselben Schwarms zu verringern. Andererseits besteht die Anordnung in einer Kettenformation auf exakt derselben Umlaufbahn in dichter Staffelung bezüglich der Längengrade, wobei durch ein in der CH-Anmeldung 1996 Nr. 2415/96 beschriebenes Verfahren zur Entfernungsmessung profitiert wird, gemäss dem eine Abschattung nur zwischen dem direkten Nachbarsatelliten ausgeschlossen sein muss.

Als Vorteil der Erfindung ergibt sich weiterhin die synergetische Nutzung von bereits zu anderen Zwecken vorgesehenen Einrichtungen zur Kommunikation zwischen Satelliten. Weiterhin besteht keine Einschränkung bei der Wahl der Anordnung der Satelliten innerhalb eines Schwarms.

Zusätzlich ist kein spezieller Satellit zur Kontrolle des Satellitenschwarms erforderlich. Vielmehr kann zur Repräsentation der Referenzposition jederzeit ein anderer Satellit aus dem Satellitenschwarm herangezogen werden, falls ein optisches Terminal (also eine der beiden Satellitenverbindungen) des als Master ausgewählten Satelliten ausfällt. Letzterer wird dabei an das jeweilige Ende oder den Anfang des Schwarms delegiert und mit dem verbliebenen Terminal auf Relativabstand zum Nachbarsatelliten gehalten, dabei muss der Ring bzw. die Kette nicht geschlossen sein

Weitere Einzelheiten, Merkmale und Vorteile der Erfindung ergeben sich nicht nur aus den Ansprüchen und diesen zu entnehmenden Merkmalen -für sich und/oder in Kombination-, sondern auch aus der nachfolgenden Beschreibung eines bevorzugten Ausführungsbeispiels.

Es zeigen:
- **Fig.1**: Die Erdumlaufbahnen von vier durch Exzentritätsvektortrennung zueinander angeordneten Satelliten.
- **Fig. 2**: Die gegenseitige Umkreisung dieser vier Satelliten auf einer Ellipse
- **Fig.3**: Einen Satellitenschwarm, dessen Satelliten durch kombinierte Exzentritäts- und Inklinationsvektortrennung zueinander angeordnet sind
- **Fig. 4**: Die Anordnung eines Satellitenschwarms auf dicht gestaffelten Langengraden in Form einer Kettenformation.

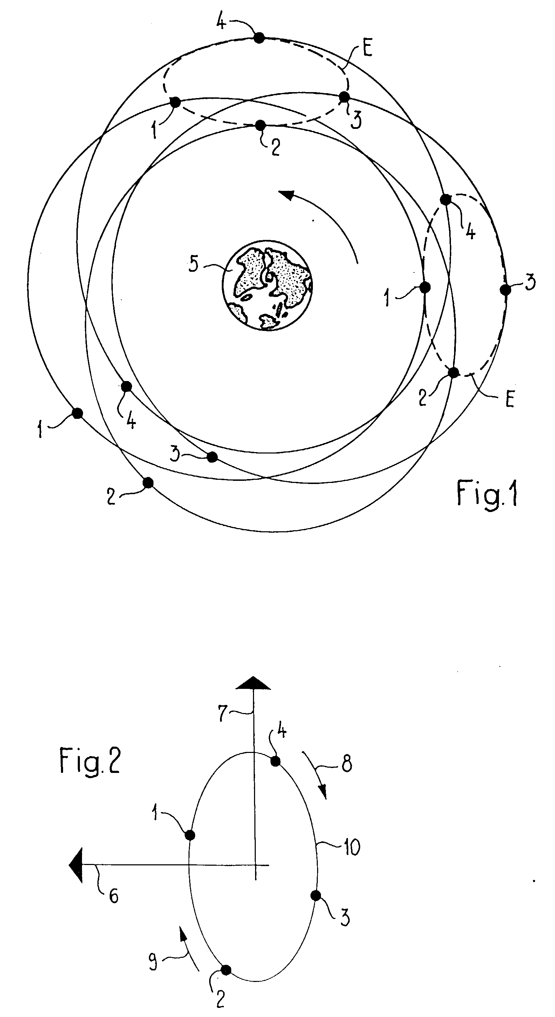

In **Fig.1** sind die Erdumlaufbahnen von vier Satelliten **1, 2, 3** und **4** um die Erde **5** dargestellt. Die vier Satelliten **1, 2, 3** und **4** sind auf ihren Erdumlaufbahnen jeweils zu drei verschiedenen Zeitpunkten dargestellt. Die erdnächsten Punkte der Bahnen aller Satelliten sind idealerweise gleichmässig über 360 Grad verteilt. Anhand des zu drei verschiedenen Zeitpunkten dargestellten Satellitenschwarms kann nachvollzogen werden, wie sich die Satelliten im Laufe einer Erdumrundung einander umkreisen Diese gegenseitige Umkreisung geschieht auf einer Ellipse ***E***, wie dies gestrichelt in **Fig. 1** und in Verdeutlichung in **Fig. 2** dargestellt ist**.**

Die Richtung einer Achse **6** zeigt hierbei in die Richtung des Erdmittelpunktes, eine weitere Achse **7** stellt die Richtung dar, in welche sich der Satellitenschwarm bewegt. Pfeil **8** und Pfeil **9** zeigen die Bewegungsrichtung der einzelnen Satelliten **1, 2, 3** und **4** auf einer Ellipse **10** an, welche während eines vollständigen Umlaufs des ganzen Satellitenschwarms um die Erde von den einzelnen Satelliten ebenfalls vollständig durchlaufen wird.

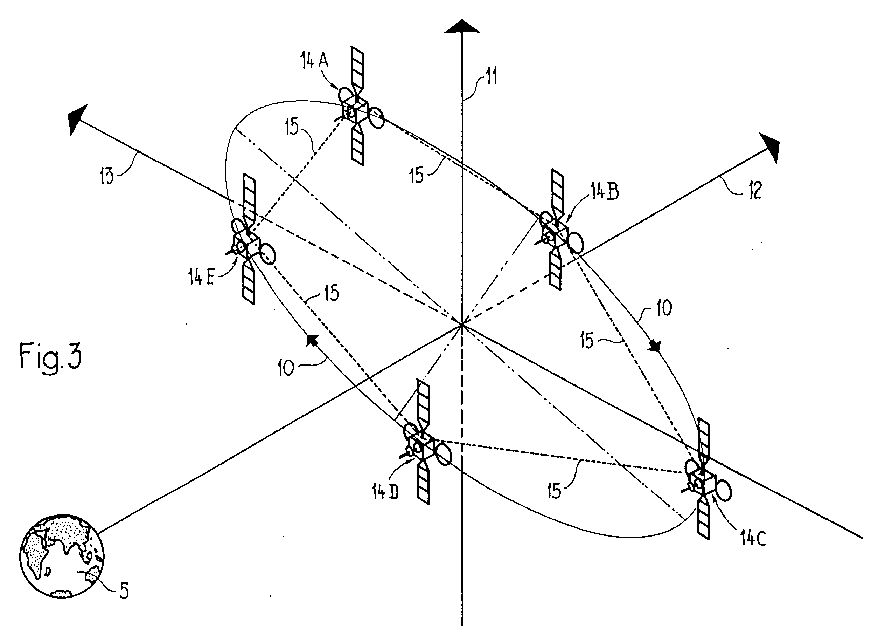

**Fig.3** stellt die kombinierte Anwendung von Exzentritäts- und Inklinationsvektorseparation dar. Hierbei ist zu sehen, dass die Ebene der Ellipse **10**, auf welcher sich Satelliten **14A**, **14B, 14C, 14D** und **14E** eines Satellitenschwarms umeinander bewegen, durch eine nach Osten zeigende Achse **13** sowie eine radial nach aussen zeigende Achse **12** eines im Schwerpunkt der durch die Ellipse **10** berandeten ebenen Fläche seinen Ursprung habenden Koordinatensystems erfassbar ist, das aus den Achsen **12** und **13** sowie einer nach Norden zeigenden Achse **11** besteht. Dies entspricht der automatischen durch die Abplattung der Erde erzeugten Bewegung eines in einem Ring angeordneten Satellitenschwarms Hierdurch ist gewährleistet, dass jeder Satellit immer einen unverstellten Ausbreitungspfad zur Erde besitzt. Das aus den Achsen **11, 12** und **13** bestehende Koordinatensystem kann in einen beliebigen korrekt ausgerichteten Satelliten **14A** verschoben gedacht werden wobei von diesem aus alle übrigen Satelliten **14B, 14C, 14D** und **14E** ihre relative Position bestimmen, indem die durch alle Satelliten **14** in Länge und Richtung gemessenen Ausbreitungspfade **15** des drahtlosen Kommunikationsnetzes zu ihren jeweiligen Nachbarn aufaddiert werden und diese Daten über die optischen Übertragungspfade in den Terminals gespeichert vorliegen.

Wird der Satellit **14B** als Koordinatenursprung gewählt, wird die relative Position von Satellit **14C** dadurch bestimmt, dass durch Abfrage des an Bord von Satellit **14B** befindlichen die Verbindung zu Satellit **14C** haltenden drahtlosen Übertragungssystems sowohl die Richtung in Azimut und Elevation als auch die Länge des zwischen den Satelliten **14B** und **14C** und den Satelliten **14B** und **14A** befindlichen Ausbreitungspfades **15** bestimmt wird. Umgekehrt kann durch die entsprechenden Einrichtungen in Satellit **14C** die gleiche Messung vorgenommen werden. Über das dabei verwendete drahtlose Übertragungssystem können die gewonnenen Daten zwischen den Satelliten **14B** und **14C** ausgetauscht werden. In beiden Satelliten ist dann die Information zur relativen Position zueinander gegeben. Ein nächster Schritt ist die Bestimmung der relativen Position der Satelliten **14C** und **14D** zueinander. Hierbei wird von beiden beteiligten Satelliten **14C** und **14D** die gegenseitige Entfernung durch die Länge des zwischen ihnen liegenden Ausbreitungspfades **15** gemessen.

Aufgrund der bei Messung in Satellit **14B** und bei Messung in Satellit **14C** unterschiedlichen Richtung des Ausbreitungspfades **15** zwischen den Satelliten **14B** und **14C** kann eine Verdrehung der beiden Satelliten zueinander erfasst werden. Somit kann die Richtung des Ausbreitungspfades **15** zwischen den Satelliten **14C** und **14D** in Bezug auf das Koordinatensystem in Satellit **14B** bestimmt werden. Somit ist es möglich, die relative Position von Satellit **14D** zu Satellit **14B** durch Addition der Komponenten der als Vektoren aufgefassten Ausbreitungspfade **15** zwischen den Satelliten **14B** und **14C** sowie **14C** und **14D** zu bestimmen. Dieses Verfahren kann bei der Bestimmung der relativen Position der Satelliten **14E** und **14A** zu Satellit **14B** fortgesetzt werden, wobei es im Falle des Satelliten **14E** günstiger ist, den Ausbreitungspfad **15** zu Satellit **14A** zu messen. Bei den Satelliten **14D** und **14E** können die Positionen über zwei verschiedene Aneinanderkettungen von Ausbreitungspfaden erfasst werden und durch Mittelung eine Erhöhung der Genauigkeit erreicht werden. Es existiert einerseits die Möglichkeit, alle Daten über die relative Position der Satelliten **14C - 14E** zum Satellit **14B** über die zwischen den Satelliten **14B -14E** bestehenden drahtlosen Übertragungsstrecken in einem Satelliten zusammenzuführen, im dortigen Bordrechner auszuwerten und eventuelle Korrekturen bei den Satelliten zu veranlassen Andererseits können die Daten auch im Bordrechner jedes Satelliten gesammelt werden, wobei jeder Satellit **14C -14E** seine relative Position zu Satellit **14B** ermittelt und eventuell Korrekturen seiner eigenen Position autonom durchführt

Um die Bahn des gesamten Satellitenschwarms um die Erde zu ändern, müssen bei allen Satelliten **14A-14E** gleichzeitig dieselben Bewegungen ausgeführt werden. Im allgemeinen werden bei einem Satelliten zur Bahnänderung zwei Bewegungen veranlasst Zum einen wird die Neigung der Umlaufbahn zur durch den Erdäquator bestimmten Ebene durch eine Bewegung in nördliche oder südliche Richtung verändert. Dies geschieht durch den kurzzeitigen Betrieb von Raketentriebwerken Analog hierzu erfolgt eine Versetzung in östlicher oder westlicher Richtung. Erfolgt der Schub des Raketentriebwerkes bei einer Änderung der Neigung der Umlaufbahn nicht exakt in nördliche oder südliche Richtung, erfolgt gleichzeitig eine Bewegung in westliche oder östliche Richtung Da eine Versetzung in westliche oder östliche Richtung viel weniger Energie erfordert, zeigen schon geringe Abweichungen der Schubrichtung Wirkung. Da weiterhin die Schubrichtungen der Satelliten **14A-14E** kaum exakt übereinstimmen dürften, wenn alle Satelliten **14A-14E** ein entsprechendes Manöver gleichzeitig ausführen, sind nach einem solchen gemeinsamen Manöver in östlicher bzw. westlicher Richtung wesentliche Änderungen der relativen Position der Satelliten **14C-14E** zu dem Satellit **14A** zu erwarten. Nach der Bahnänderung des ganzen Satellitenschwarms werden die eventuell durch von den Raketentriebwerken hervorgerufenen Erschütterungen unterbrochenen drahtlosen Verbindungen zwischen den Satelliten **14A-14E** wiederhergestellt und die relativen Positionen der Satelliten **14C-14E** zum Satelliten **14B** neu erfasst, woraufhin entweder jeder Satellit **14C-14E** seine relative Position zu Satellit **14B** autonom wiederherstellt oder dies durch einen Befehl von einem speziell vorgesehenen Satelliten durchführt. Da durch den Betrieb von Triebwerken kurzfristige Unterbrüche der drahtlosen Verbindung entstehen können, ist ein Vorgehen vorteilhaft, bei dem die Korrekturen aller relativen Positionen der Satelliten **14C-14E** zu Satellit **14B** gleichzeitig erfolgen, nachdem in einer vorangehenden Phase alle erforderlichen Positionsänderungen berechnet wurden.

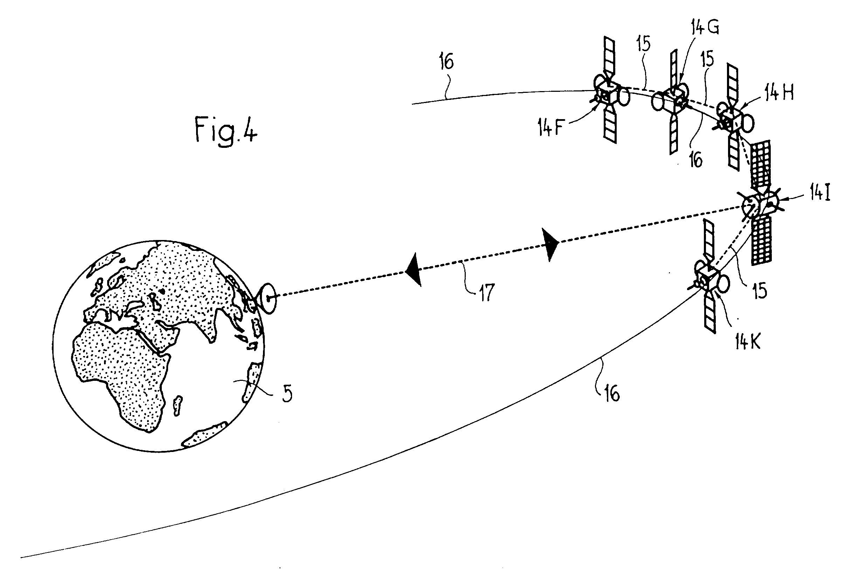

**Fig.4** zeigt einen Satellitenschwarm, der auf dicht gestaffelten Längengraden angeordnet ist, in sogenannter Kettenformation. Normalerweise ist hierbei im Unterschied der in **Fig. 3** gezeigten Anordnung nur der jeweils fehlende unmittelbare Nachbar der Satelliten **14F** und **14K** aufgrund der geringen Krümmung der gemeinsamen Erdumlaufbahn **16** am Ende eines unverstellten Ausbreitungspfades. Dies bedingt, dass diese beiden Satelliten **14F** und **14K** sogenannte Eck- und/oder Endsatelliten der Kettenformation aufweisen und keine Verbindung zu ihrem zweiten Nachbar haben. Sie eignen sich somit nicht zur Übernahme der Masterfunktion.
Erfolgt also eine Staffelung von Satelliten entlang derselben Erdumlaufbahn **16,** so können bei Wahrung eines Sicherheitsabstandes Entfernungen von 4 bis 6km zwischen zwei Satelliten eingehalten werden, das heisst, bis zu 12 Satelliten können auf einer GEO Position von nur 0,1° (=74*KM*) positioniert werden.
Dies ist abhängig vom sogennanten 3 σ -Messfehler der zuständigen Bodenstation **17**. die die Position eines ausgewählten Mastersatelliten, im vorliegenden Beispiel **14J** im Schwarm bestimmt.

Gemäss der vorliegenden Erfindung kann sich daher der ausgewählte Master in einem vorbestimmten Satelliten befinden; vorzugsweise wird er jedoch in einem beliebigen Satelliten vorhanden sein, der alleine mit der Bodenstation in Verbindung steht Die Masterfunktion ist somit vorzugsweise bei mehreren oder allen Satelliten vorhanden, so dass bei Ausfall die Masterfunktion von einem anderen Satelliten übernommen werden kann. Als Referenz für die Winkelmessungen werden Schwungräder oder Gyroskope benuzt. Der ausgewählte Mastersatellit trägt in seiner Bewegung ein orthogonales Koordinaten-System mit, dessen positive Z-Achse (Gierachse) gegen das Erdzentrum gerichtet ist und dessen positive X-Achse (Rollachse) sich in der Umlaufebene befindet und jeweils zur Erdumlaufbahn tangent ist, und wobei die Y-Achse (Nickachse) senkrecht zur Umlaufebene liegt. Dieses Koordinaten-system ist dann für die Vermessung der verbleibenden Satelliten verbindlich, wobei mindestens N - 2 Satelliten, einschliesslich des Mastersatelliten, derart ausgebildet sind, dass sie, vorzugsweise paarweise, Messungen von einem zum anderen und umgekehrt durchführen. Vorzugsweise befinden sich die Satelliten in einem gemeinsamen, eingeschränkten Bereich von höchstens 0.12° oder 0.15° oder 0.25° auf der geostationären Umlaufbahn.

## Patentansprüche

1. Verfahren zur Haltung der Positionen von Satelliten eines Satellitenschwarmes relativ zu den übrigen Satelliten des Satellitenschwarmes, unter Benutzung einer optischen Satellitenverbindung, wobei der Satellitenschwarm durch N Satelliten gebildet ist, die sich in einem gemeinsamen, eingeschränkten Bereich auf einer geostationären Umlaufbahn befinden, **dadurch gekennzeichnet,**
- dass einem ersten Satelliten (**14B, 14J)** des Satellitenschwarmes (**14A, 14B, 14C, 14D, 14E, 14F, 14G, 14H, 14J, 14K**) eine Funktion als Mastersatellit **(14B, 14J)** zugeteilt wird,
- dass vom Mastersatelliten **(14B, 14J)** ausgehend ein für alle Satelliten (**14A, 14B, 14C, 14D, 14E, 14F, 14G, 14H, 14J, 14K)** des Satellitenschwarmes verbindliches Koordinatensystem für die Vermessung der Positionen der Satelliten des Satellitenschwarmes festgelegt wird,
- dass der Mastersatellit (**14B, 14J**) mit einer Bodenstation in Verbindung steht und durch diese dessen Postion bestimmt wird,
- dass, ausgehend vom Mastersatelliten **(14B, 14J)**, mindestens N - 2 Satelliten des Satellitenschwarmes (**14A, 14B, 14C, 14D, 14E, 14F, 14G, 14H, 14J, 14K**), veranlasst werden, relativ zu einem direkt benachbarten Satelliten, dessen relative Position zum veranlassten Satelliten noch unvermessen ist, je eine präzise Entfernungsmessung sowie je eine die Richtung eines Mess-Ausbreitungspfades definierende Winkelmessung durchzuführen,
- dass mindestens die nicht den Mastersatelliten (**14B, 14J**), bildenden Satelliten (**14A, 14C, 14D, 14E, 14F, 14G, 14H, 14K**) des Satellitenschwarmes veranlasst werden, relativ zu demjenigen ihrer benachbarten Satelliten, der die Entfernungs- und Winkelmessungen zur Bestimmung seiner Position durchgeführt hat, eine weitere präzise Entfernungsmessung sowie eine die Richtung des Mess-Ausbreitungspfades (**15**) definierende Winkelmessung durchzuführen,
- dass aus den genannten Entfemungs- und Winkelmessungen für die Satelliten (**14A, 14C, 14D, 14E, 14F, 14G, 14H, 14K**) des Satellitenschwarmes eine Bestimmung ihrer relativen Positionen innerhalb des Satellitenschwarmes erfolgt, und
- dass für jeden der Satelliten (**14A, 14C**, **14D, 14E, 14F, 14G, 14H, 14K**) eine Korrektur seiner relativen Position innerhalb des Satellitenschwarmes aufgrund der genannten Bestimmung eingeleitet und durchgeführt wird.

2. Verfahren nach Anspruch **1**,
**dadurch gekennzeichnet,**
dass die Mess-Ausbreitungspfade (**15**) identisch mit Kommunikationspfaden sind, auf denen Informationsausbreitungen zwischen den einzelnen Satelliten (**14A, 14B, 14C, 14D, 14E, 14F, 14G, 14H, 14J, 14K**) des Satellitenschwarmes erfolgen.

3. Verfahren nach mindestens einem der Ansprüche **1** bis **2**,
**dadurch gekennzeichnet,**
dass die Korrekturen der Positionen der Satelliten (**14A, 14C, 14D, 14E, 14F, 14G, 14H, 14K**) durch Befehle der Bodenstation (**17**) via den Mastersatelliten (**14B, 14J**) und initialisiert vom letzteren den restlichen Satelliten (**14A, 14C, 14D, 14E, 14F, 14G, 14H, 14K**) mitgeteilt und von allen Satelliten (**14A, 14B, 14C, 14D, 14E; 14F, 14G, 14H, 14J, 14K**) des Satellitenschwarms gleichzeitig ausgeführt werden.

4. Verfahren nach mindestens einem der Patentansprüche **1** bis **3**,
**dadurch gekennzeichnet,**
dass jeder Satellit (**14A, 14B, 14C, 14D, 14E; 14F, 14G, 14H, 14J, 14K)** des Satellitenschwarms die Positions bestimmungsdaten, welche seine Position bestimmen, an die anderen Satelliten des Satellitenschwarms weitergibt.

5. Verfahren nach mindestens einem der Patentansprüche **1** bis **4**,
**dadurch gekennzeichnet,**
dass die Position jedes Satelliten des Satellitenschwarmes periodisch überprüft und die Korrektur der Position automatisch dann durchgeführt wird, wenn sich der Satellit ausserhalb eines durch eine Toleranzvorgabe festgelegten Raumes befindet, welche Toleranzvorgabe vorzugsweise im Bordrechner des Satelliten gespeichert ist.

6. Verfahren nach mindestens einem der Patentansprüche **1** bis **5**,
**dadurch gekennzeichnet,**
dass die Satelliten (**14F - 14K**) des Satellitenschwarmes in einem gemeinsamen, eingeschränkten Bereich auf der geostationären Umlaufbahn angeordnet werden, welcher Bereich durch einen Kegel mit im Erdmittelpunkt liegender Spitze begrenzt wird, dessen halber Oeffnungswinkel weniger als 0.1° beträgt.

7. Verfahren nach Anspruch **6**,
**dadurch gekennzeichnet,**
dass der halbe Oeffnungswinkel des genannten Kegels in der Umgebung der genannten Obergrenze von 0.1° gewählt wird, um die Satelliten in Formation einer geschlossenen Kette, welche eine etwa elliptische Bahn bildet, anzuordnen.

8. Verfahren nach Anspruch **6**,
**dadurch gekennzeichnet**,
dass die Satelliten in Formation einer offenen Kette angeordnet werden, wobei vorzugsweise zwischen den eine Endstellung in der Kette einnehmenden Satelliten ein unverstellter Mess-Ausbreitungspfad liegt.

9. Anordnung zur Durchführung des Verfahrens nach mindestens einem der Ansprüche **1** bis **8**, wobei jeder der N Satelliten eines Satellitenschwarmes mit optischen Mitteln ausgerüstet sind, um Entfernungsmessungen zu den anderen Satelliten durchzuführen,
**dadurch gekennzeichnet,**
- dass mindestens ein erster Satellit (**14B, 14J**) des Satellitenschwarmes (**14A, 14B, 14C, 14D, 14E; 14F, 14G, 14H, 14J, 14K**) so ausgebildet und angeordnet ist, dass er eine Funktion als Mastersatellit ausüben kann,
- dass der Mastersatellit (**14B, 14J**) so ausgebildet ist, dass ein für alle Satelliten (**14A, 14B, 14C, 14D, 14E; 14F, 14G, 14H, 14J, 14K**) des Satellitenschwarmes verbindliches Koordinatensystem für die Vermessung der Positionen der Satelliten des Satellitenschwarmes einführbar ist, das vom genannten Mastersatelliten (**14B, 14J**) ausgeht,
- dass der Mastersatellit (**14B, 14J**) so ausgebildet und angeordnet ist, dass er mit einer Bodenstation in Verbindung bringbar ist, durch welche seine Position bestimmbar ist,
- dass die optischen Mittel der Satelliten des Satellitenschwarmes (**14A, 14B, 14C 14D, 14E; 14F, 14G, 14H, 14J, 14K**) nebst den genannten Mitteln zur Entfernungsmessung Mittel zur Durchführung von Winkelmessungen aufweisen, damit
- ausgehend vom Mastersatelliten (**14B, 14J**), mindestens N - 2 Satelliten des Satelliten schwarmes (**14A, 14B, 14C, 14D, 14E, 14F, 14G, 14H, 14J, 14K**) relativ zu einem direkt benachbarten Satelliten, dessen relative Position noch unvermessen ist, je eine präzise Entfernungsmessung sowie je eine die Richtung eines Mess-Ausbreitungspfades definierende Winkelmessung durchzuführen, sowie
- mindestens die nicht den Mastersatelliten (**14B, 14J**), bildenden Satelliten (**14A, 14C, 14D, 14E, 14F, 14G, 14H, 14K)** des Satellitenschwarmes veranlasst werden, relativ zu demjenigen ihrer benachbarten Satelliten, der die Entfernungs- und Winkelmessungen zur Bestimmung seiner Position durchgeführt hat, eine weitere präzise Entfernungsmessung sowie eine die Richtung des Mess-Ausbreitungspfades (**15**) definierende Winkelmessung durchzuführen,
- dass die Satelliten (**14A, 14B, 14C 14D, 14E; 14F, 14G, 14H, 14J, 14K**) des Satellitenschwarmes so ausgebildet und angeordnet sind, dass aus den genannten Entfernungs- und Winkelmessungen für die Satelliten eine Bestimmung ihrer relativen Positionen innerhalb des Satellitenschwarmes erfolgt, und
- dass die Satelliten (**14A, 14C, 14D, 14E, 14F, 14G, 14H, 14K**) des Satellitenschwarmes so ausgebildet und angeordnet sind, dass für jeden der Satelliten eine Korrektur seiner relativen Position innerhalb des Satellitenschwarmes aufgrund der genannten Bestimmung eingeleitet und durchgeführt wird.

## Claims

1. A method of maintaining the positions of satellites of a satellite constellation in relation to the other satellites of the satellite constellation using an optical satellite connection, wherein the satellite constellation is formed from N satellites which are situated in a common, restricted region on a geostationary orbit,
**characterised in that**
- the function of master satellite (**14B, 14J**) is assigned to a first satellite **(14B, 14J)** of the satellite constellation (**14A, 14B, 14C, 14D, 14E, 14F, 14G, 14H, 14J, 14K)**,
- that starting from the master satellite (**14B, 14J**), a system of coordinates which is binding for all the satellites (**14A, 14B, 14C, 14D, 14E, 14F, 14G, 14H, 14J, 14K**) of the satellite constellation is fixed for measuring the position of the satellites of the satellite constellation,
- that the master satellite (**14B, 14J**) is in communication with an earth station and its position is determined by the latter,
- that, starting from the master satellite (**14B, 14J**), at least N - 2 satellites of the satellite constellation (**14A, 14B, 14C, 14D, 14E, 14F, 14G, 14H, 14J, 14K**) are each actuated to make a precise distance measurement as well as an angle measurement which defines the direction of a measurement propagation path, in relation to a directly adjacent satellite, the position of which in relation to the actuated satellite is still unmeasured,
- that at least the satellites (**14A, 14C, 14D, 14E, 14F, 14G, 14H, 14K**) of the satellite constellation which do not form the master satellite (**14B, 14J**) are actuated to make a further precise distance measurement as well as an angle measurement which defines the direction of the measurement propagation path (**15**), in relation to that one of their adjacent satellites which has made the distance and angle measurements in order to determine its position,
- that from said distance and angle measurements for the satellites (**14A, 14C, 14D, 14E, 14F, 14G, 14H, 14K**) of the satellite constellation a determination is made of their relative positions within the satellite constellation, and
- that for each of the satellites (**14A, 14C, 14D, 14E, 14F, 14G, 14H, 14K**) a correction is introduced and is made of its relative position within the satellite constellation based on said determination.

2. A method according to claim **1**,
**characterised in that**
the measurement propagation paths (**15**) are identical to communication paths on which the propagation of information is effected between the individual satellites (**14A, 14B, 14C, 14D, 14E, 14F, 14G, 14H, 14J, 14K)** of the satellite constellation.

3. A method according to at least one of claims **1** or **2**,
**characterised in that**
the corrections of the positions of the satellites (**14A, 14C, 14D, 14E, 14F, 14G, 14H, 14K**) are communicated to the remaining satellites (**14A, 14C, 14D, 14E; 14F, 14G, 14H, 14K**), by commands from the earth station (**17**) via the master satellites (**14B, 14J**) and are initialised by the latter, and are made simultaneously by all the satellites (**14A, 14B, 14C, 14D, 14E, 14F, 14G, 14H, 14J, 14K**) of the satellite constellation.

4. A method according to at least one of claims **1** to **3**,
**characterised in that**
each satellite (**14A, 14B, 14C, 14D, 14E; 14F, 14G, 14H, 14J, 14K**) of the satellite constellation transmits the position-determining data, which determines its position, to the other satellites of the satellite constellation.

5. A method according to at least one of claims **1** to **4**,
**characterised in that**
the position of each satellite of the satellite constellation is periodically checked and a correction of its position is made automatically if the satellite is situated outside a space determined by a tolerance specification which is preferably stored in the on-board computer of the satellite.

6. A method according to at least one of claims **1** to **5**,
**characterised in that**
the satellites (**14F - 14K**) of the satellite constellation are disposed in a common, restricted region on the geostationary orbit, which region is delimited by a cone with its vertex at the centre of the earth and the half-cone angle of which is less than 0.1°.

7. A method according to claim **6**,
**characterised in that**
the half-cone angle of said cone is selected to be in the vicinity of said upper limit of 0.1° in order to arrange the satellites in the formation of a closed chain which forms an approximately elliptical path.

8. A method according to claim **6**,
**characterised in that**
the satellites are disposed in the formation of an open chain, wherein a fixed measurement propagation path is preferably situated between the satellites which assume an end position in the chain.

9. An arrangement for carrying out the method according to at least one of claims **1** to **8**, wherein each of the N satellites of a satellite constellation is equipped with optical means for making distance measurements to the other satellites,
**characterised in that**
- at least one first satellite (**14B, 14J**) of the satellite constellation (**14A, 14B, 14C, 14D, 14E; 14F, 14G, 14H, 14J, 14K**) is designed and arranged so that it can perform the function of a master satellite,
- that the master satellite (**14B, 14J**) is designed so that a system of coordinates which is binding for all the satellites (**14A, 14B, 14C, 14D, 14E; 14F, 14G, 14H, 14J, 14K**) of the satellite constellation, and which starts from said master satellite (**14B, 14J**), can be introduced for measuring the positions of the satellites of the satellite constellation,
- that the master satellite (**14B, 14J**) is designed and arranged so that it can be placed in communication with an earth station by which its position can be determined,
- that the optical means of the satellites of the satellite constellation (**14A, 14B, 14C, 14D, 14E; 14F, 14G, 14H, 14J, 14K**) comprise means for making angle measurements together with said means for distance measurement, so that
- starting from the master satellite **(14B, 14J)**, at least N - 2 satellites of the satellite constellation (**14A, 14B, 14C, 14D, 14E, 14F, 14G, 14H, 14J, 14K**) each make a precise distance measurement and each make an angle measurement which defines the direction of a measurement propagation path, in relation to a directly adjacent satellite, the position of which is still unmeasured, and that
- at least the satellites (**14A, 14C, 14D, 14E, 14F, 14G, 14H, 14K**) of the satellite constellation which do not form the master satellite (**14B, 14J**) are actuated to make a further precise distance measurement as well as an angle measurement which defines the direction of the measurement propagation path (**15**), in relation to that one of their adjacent satellites which has made the distance and angle measurements in order to determine its position,
- that the satellites (**14A, 14B, 14C, 14D, 14E; 14F, 14G, 14H, 14J, 14K**) of the satellite constellation are designed and arranged so that a determination is made, from said distance and angle measurements for the satellites, of their relative positions within the satellite constellation, and
- that the satellites (**14A, 14C, 14D, 14E, 14F, 14G, 14H, 14K**) of the satellite constellation are designed and arranged so that for each of the satellites a correction is introduced and is made of its relative position within the satellite constellation based on said determination.

## Revendications

1. Méthode pour le maintien en formation de satellites d'une constellation de satellites par rapport aux autres satellites de la constellation de satellites en utilisant une liaison optique entre les satellites, dans laquelle la constellation de satellites est formée par N satellites qui se trouvent dans une zone commune restreinte sur une orbite géostationnaire, caractérisée en ce que
- à un premier satellite (14B, 14J) de la constellation de satellites (14A, 14B, 14C, 14D, 14E, 14F, 14G, 14H, 14J, 14K) est affectée une fonction de satellite maître (14B, 14J),
- en partant du satellite maître (14B, 14J), un système de coordonnées obligatoire pour tous les satellites (14A, 14B, 14C, 14D, 14E, 14F, 14G, 14H, 14J, 14K) de la constellation de satellites est déterminé pour le repérage des positions des satellites de la constellation de satellites,
- le satellite maître (14B, 14J) est en relation avec une station au sol et sa position est déterminée par celle-ci,
- en partant du satellite maître (14B, 14J), au moins N-2 satellites de la constellation de satellites (14A, 14B, 14C, 14D, 14E, 14F, 14G, 14H, 14J, 14K) sont incités à réaliser, par rapport à un satellite voisin direct, dont la position relative par rapport au satellite incité n'est pas encore repérée, respectivement une mesure d'éloignement précis ainsi qu'une mesure angulaire définissant la direction d'une voie de propagation de mesure,
- au moins les satellites (14A, 14C, 14D, 14E, 14F, 14G, 14H, 14K) d'une constellation de satellites ne formant pas le satellite maître (14B, 14J) sont incités, par rapport à leur satellite voisin respectif qui a réalisé les mesures d'éloignement et d'angle pour déterminer sa position, à réaliser une autre mesure d'éloignement précise ainsi qu'une mesure angulaire définissant la direction de la voie de propagation de mesure (15),
- à partir des mesures d'éloignement et d'angle nommées pour les satellites (14A, 14C, 14D, 14E, 14F, 14G, 14H, 14K) de la constellation de satellites, une détermination de leurs positions relatives à l'intérieur de la constellation de satellites est réalisée, et en ce que
- pour chacun des satellites (14A, 14C, 14D, 14E, 14F, 14G, 14H, 14K), une correction de sa position relative à l'intérieur de la constellation de satellites est initiée et réalisée sur la base de la détermination nommée.

2. Méthode selon la revendication 1,
caractérisée en ce que les voies de propagation de mesure (15) sont identiques aux voies de communication sur lesquelles sont réalisées les propagations d'informations entre les différents satellites (14A, 14B, 14C, 14D, 14E, 14F, 14G, 14H, 14J, 14K) de la constellation de satellites.

3. Méthode selon au moins l'une des revendications 1 à 2,
caractérisée en ce que les corrections des positions des satellites (14A, 14C, 14D, 14E, 14F, 14G, 14H, 14K) sont communiquées aux autres satellites (14A, 14C, 14D, 14E, 14F, 14G, 14H, 14K) par des commandes de la station au sol (17) par le biais du satellite maître (14B, 14J) et initiées par ce dernier, et réalisées en même temps par tous les satellites (14A, 14B, 14C, 14D, 14E, 14F, 14G, 14H, 14J, 14K) de la constellation de satellites.

4. Méthode selon au moins l'une des revendications 1 à 3,
caractérisée en ce que chaque satellite (14A, 14B, 14C, 14D, 14E, 14F, 14G, 14H, 14J, 14K) de la constellation de satellites communique les données de détermination de position, qui déterminent sa position, aux autres satellites de la constellation de satellites.

5. Méthode selon au moins l'une des revendications 1 à 4,
caractérisée en ce que la position de chaque satellite de la constellation de satellites est vérifiée périodiquement et que la correction de la position est ensuite automatiquement réalisée lorsque le satellite se trouve en-dehors d'un espace défini par une spécification de tolérance, laquelle spécification de tolérance est de préférence enregistrée dans l'ordinateur embarqué du satellite.

6. Méthode selon au moins l'une des revendications 1 à 5,
caractérisée en ce que les satellites (14F - 14K) de la constellation de satellites sont disposés dans une zone commune restreinte sur l'orbite géostationnaire, laquelle zone est délimitée par un cône ayant pour pointe le centre de gravité terrestre et dont le demi-angle d'ouverture est inférieur à 0,1°.

7. Méthode selon la revendication 6,
caractérisée en ce que le demi-angle d'ouverture du cône nommé est sélectionné dans la région de la limite supérieure nommée de 0,1° pour disposer les satellites selon la formation d'une chaîne fermée qui forme une orbite approximativement elliptique.

8. Méthode selon la revendication 6,
caractérisée en ce que les satellites sont disposés selon la formation d'une chaîne ouverte, une voie de propagation de mesure non obstruée existant de préférence entre les satellites occupant une position d'extrémité dans la chaîne.

9. Dispositif de réalisation de la méthode selon au moins l'une des revendications 1 à 8, dans lequel chacun des N satellites d'une constellation de satellites est équipé de moyens optiques pour réaliser des mesures d'éloignement par rapport aux autres satellites,
caractérisé en ce que
- au moins un premier satellite (14B, 14J) de la constellation de satellites (14A, 14B, 14C, 14D, 14E, 14F, 14G, 14H, 14J, 14K) est conçu et disposé de façon telle qu'il peut exercer la fonction de satellite maître,
- le satellite maître (14B, 14J) est conçu de façon telle qu'un système de coordonnées obligatoire pour tous les satellites (14A, 14B, 14C, 14D, 14E, 14F, 14G, 14H, 14J, 14K) de la constellation de satellites peut être introduit pour le repérage des positions des satellites de la constellation, lequel part du satellite maître nommé (14B, 14J),
- le satellite maître (14B, 14J) est conçu et disposé de façon telle qu'il peut être mis en relation avec une station au sol, par le biais de laquelle sa position peut être déterminée,
- les moyens optiques des satellites de la constellation de satellites (14A, 14B, 14C, 14D, 14E, 14F, 14G, 14H, 14J, 14K), outre les moyens nommés de mesure d'éloignement, présentent des moyens de réalisation de mesures angulaires, pour que
- en partant du satellite maître (14B, 14J), au moins N-2 satellites de la constellation de satellites (14A, 14B, 14C, 14D, 14E, 14F, 14G, 14H, 14J, 14K) réalisent, par rapport à un satellite directement voisin, dont la position relative n'est pas encore repérée, respectivement une mesure d'éloignement précise ainsi qu'une mesure angulaire définissant la direction d'une voie de propagation de mesure, et que
- au moins les satellites (14A, 14C, 14D, 14E, 14F, 14G, 14H, 14K) d'une constellation de satellites ne formant pas le satellite maître (14B, 14J) sont incités, par rapport à leur satellite respectivement voisin qui a réalisé les mesures d'éloignement et d'angle pour déterminer sa position, à réaliser une autre mesure d'éloignement précise ainsi qu'une mesure angulaire définissant la direction de la voie de propagation de mesure (15),
et en ce que
- les satellites (14A, 14B, 14C, 14D, 14E, 14F, 14G, 14H, 14J, 14K) de la constellation de satellites sont conçus et disposés de façon telle que, à partir des mesures nommées d'éloignement et d'angle pour les satellites, une détermination de leurs positions relatives à l'intérieur de la constellation de satellites est réalisée, et en ce que
- les satellites (14A, 14C, 14D, 14E, 14F, 14G, 14H, 14K) de la constellation de satellites sont conçus et disposés de façon telle que, pour chacun des satellites, une correction de sa position relative à l'intérieur de la constellation de satellites est initiée et réalisée sur la base de la détermination nommée.
